# EUROPEAN PATENT APPLICATION

(11) **EP 2 400 502 A2**
(43) Date of publication of application: **28.12.2011**
(21) Application number: 11171190.9
(22) Date of filing: 23.06.2011
(51) Int. Cl.: G21C 3/322, G21C 5/06

(54) **Pressure-loss adjusting member and nuclear reactor**

(30) Priority: 25.06.2010 JP 2010145300
(71) Applicant: Mitsubishi Heavy Industries, Ltd., Tokyo 108-8215 (JP)
(72) Inventor: Matsumoto, Atsushi, Tokyo 108-8215 (JP); Kubo, Noboru, Tokyo 108-8215 (JP); Yoshimura, Ryo, Tokyo 108-8215 (JP)
(74) Representative: Intès, Didier Gérard André

(57) **Abstract**

[Problem to be Solved] To easily distribute a flow rate of a primary coolant to fuel assemblies.

[Solution] A pressure-loss adjusting member 60 includes: engagement holes 61 into which a plurality of fuel assembly guide pins 24 formed on a lower core support plate 22 can be inserted respectively, the engagement holes being formed in a same positional relationship as a relative positional relationship between positioning holes formed in plural in a lower nozzle; and a pressure-loss adjusting hole 62 that can cause light water flowing around a fuel assembly to pass therethrough in a state with a pressure-loss in the fuel assembly being increased more than that of when the light water passes through only lower core support plate flow holes 23 formed on the lower core support plate 22. Accordingly, the pressure-loss adjusting member 60 can be easily arranged on the lower core support plate 22. Further, by arranging the pressure-loss adjusting member 60 between a fuel assembly having a small pressure-loss and the lower core support plate 22, the flow rate of light water flowing to the fuel assembly having a small pressure-loss can be decreased. As a result, the flow rate of light water to the fuel assemblies can be easily distributed.

## Description

### [Technical field]

The present invention relates to a pressure-loss adjusting member and a reactor.

### [Background art]

In a reactor internal, which is a part that reacts fuel in a reactor, a plurality of fuel rods are arranged therein in a state of a fuel assembly having a bundle of fuel rods, and the circumference of the fuel assembly is filled with light water used as a primary coolant or a moderating material. In a pressurized water reactor (PWR), which is one type of reactors, a path at the time of extracting energy is separated into a primary cooling system and a secondary cooling system. In the primary cooling system, light water exposed to heat at the time of a fuel reaction is made high-temperature and high-pressure water by pressurizing light water circulating in the reactor including the reactor internal so that light water does not boil. In the secondary cooling system, light water circulating in the secondary cooling system is exposed to heat of the high-temperature and high-pressure water in the primary cooling system so that light water is brought to a boil, and energy is extracted as high-temperature and high-pressure steam.

In the pressurized water reactor, a plurality of fuel assemblies are mounted on a lower core support plate provided in a lower part of a reactor vessel, in a state with the fuel assembly being mounted on a lower nozzle. A plurality of holes are formed on the lower core support plate and the lower nozzle, and light water circulating in the reactor internal flows upward from below the lower core support plate, passes through the holes in the lower core support plate and then the holes in the lower nozzle, and flows toward the fuel assembly on the lower nozzle. Accordingly, the light water circulates in the primary cooling system, while being exposed to the heat at the time of a fuel reaction.

In the pressurized water reactor, at the time of circulation of light water, light water passes through the holes in the lower core support plate and in the tower nozzle and flows to the circumference of the fuel assembly. However, a flow rate of light water flowing to the circumference of the fuel assembly may be different according to an arrangement position of the fuel assembly. Further, when the performance of the reactor at the time of operation is considered, it may be desired to adjust the flow rate thereof to the fuel assembly. Therefore, the conventional reactor may have a structure for adjusting the flow rate of light water flowing to the fuel assemblies.

For example, in a reactor described in Patent Literature 1, a flow-resistance changing member is provided on a lower core support plate so that the flow resistance of holes formed in a central part of the lower core support plate is increased with respect to the flow resistance of the holes formed on a periphery of the lower core support plate, of the holes formed on the lower core support plate. When light water passes through the holes in the lower core support plate, such flow distribution is likely to occur that the flow rate increases in a central part than in the periphery of the lower core support plate due to an influence of structures in the reactor. By providing a flow-resistance changing member to change the flow resistance in this manner, the flow distribution can be equalized.

In a fuel assembly for a pressure-loss variable pressurized water reactor described in Patent Literature 2, a pressure-loss adjusting plate having a pressure-loss adjusting element fixed thereon, which is arranged at a position corresponding to holes formed in a lower nozzle, is fixed by a screw on a lower surface of the lower nozzle. Accordingly, the flow rate of light water to the fuel assembly positioned on the lower nozzle can be adjusted for each of fuel assemblies.

### [Citation List]

### [Patent Literature]

[PTL 1] JP 2009-75001A
[PTL 2] JP H5-240982A

### [Summary of Invention]

### [Technical Problem]

When energy is to be extracted from the fuel assembly by the reactor, it is desired that the flow rate of light water flowing from below the lower plenum toward the fuel assemblies is distributed to generate uniform flow with respect to the fuel assemblies. In the reactor, however, the arrangement position of the fuel assembly on the lower core support plate may be changed at the time of inspection. Further, a pressure-loss in the fuel assembly may be different according to the fuel assembly. Therefore, when the arrangement position of the fuel assembly is changed, it may be preferable to change the flow resistance according to the pressure-loss in the fuel assembly. However, when the flow-resistance changing member is provided on the lower core support plate as described in Patent Literature 1, even if it is desired to change the flow resistance, it may be difficult to correspond to this change.

Further, as described in Patent Literature 2, when the pressure-loss adjusting plate is fixed by a screw on the lower surface of the lower nozzle, because the pressure-loss adjusting plate is fitted to each lower nozzle, the flow resistance can be changed by replacing the pressure-loss adjusting plate. However, because the pressure-loss adjusting plate is fixed by the screw to the lower nozzle, which is arranged in plural on the lower core support plate, it is a complicated work to provide a member used for adjusting the flow rate.

The present invention has been achieved to solve the above problems, and an object of the present invention is to provide a pressure-loss adjusting member and a reactor that can easily distribute a flow rate of a primary coolant to fuel assemblies.

### [Solution to Problem]

According to an aspect of the present invention, a pressure-loss adjusting member includes: engagement holes into which a plurality of positioning pins formed on a lower core support plate are respectively inserted, on one surface of which a plurality of lower nozzles respectively arranged at one end of a fuel assembly can be arranged, the engagement holes being formed in a same positional relationship as a relative positional relationship between positioning holes formed in plural in the lower nozzle, so that the positioning pins can be inserted therein; and a pressure-loss adjusting hole that can cause a primary coolant to pass therethrough in a state with a pressure-loss in the fuel assembly being increased more than that of when the primary coolant for the fuel assembly passes through only lower core support plate flow holes formed on the lower core support plate.

According to the present invention, because a plurality of engagement holes, into which the positioning pins on the lower core support plate can be inserted, are formed in a same positional relationship as a relative positional relationship between a plurality of positioning holes formed in the lower nozzle, the pressure-loss adjusting member can be easily arranged on the lower core support plate by using the positioning pins and the engagement holes. Further, a pressure-loss adjusting hole that can cause the primary coolant to pass therethrough in a state with a pressure-loss in the fuel assembly being increased more than that of when the primary coolant of the fuel assembly passes through only the lower core support plate flow hole is formed in the pressure-loss adjusting member. Therefore, when the primary coolant flows from the lower core support plate, on which the pressure-loss adjusting member is arranged, toward the lower nozzle, the primary coolant having passed through the lower core support plate flow hole passes and flows through the pressure-loss adjusting hole. Therefore, the primary coolant flows in a state with a pressure-loss being increased as compared with a case that the pressure-loss adjusting member is not arranged on the lower core support plate. Accordingly, by arranging the pressure-loss adjusting member between the lower nozzle of a fuel assembly having a small pressure-loss and the lower core support plate, the pressure-loss of the primary coolant flowing toward the fuel assembly can be increased, thereby enabling to decrease the flow rate. Therefore, the flow rate of the primary coolant flowing in the fuel assembly can be made substantially the same as that of the primary coolant flowing in a fuel assembly having a large pressure-loss. As a result, the flow rate of the primary coolant to the fuel assemblies can be easily distributed.

Advantageously, in the pressure-loss adjusting member, the pressure-loss adjusting holes have a total effective opening area smaller than a total opening area of one or a plurality of the lower core support plate flow holes for causing the primary coolant to flow to one of the lower nozzles, of the lower core support plate flow holes formed in plural in the lower core support plate.

According to the present invention, the pressure-loss adjusting hole has the effective opening area smaller than the opening area of the lower core support plate flow hole for causing the primary coolant to flow to one of the lower nozzles, of the lower core support plate flow holes formed in plural on the lower core support plate. Therefore, the pressure-loss when the primary coolant passes through the lower core support plate flow hole and the pressure-loss adjusting hole can be reliably increased compared to that when the primary coolant passes through only the lower core support plate flow hole. Accordingly, by arranging the pressure-loss adjusting member between the lower nozzle of a fuel assembly having a small pressure-loss and the lower core support plate, the flow rate of the primary coolant flowing in the fuel assembly can be made substantially the same as that of the primary coolant flowing in a fuel assembly having a large pressure-loss more reliably. As a result, the flow rate of the primary coolant to the fuel assemblies can be distributed more reliably.

Advantageously, in the pressure-loss adjusting member, the pressure-loss adjusting hole is formed in plural, so that the primary coolant having passed through the lower core support plate flow holes can be split.

According to the present invention, the pressure-loss adjusting holes can divert the primary coolant having passed through the lower core support plate flow holes. Therefore, the pressure-loss when the primary coolant passes through the lower core support plate flow holes and then passes through the pressure-loss adjusting holes can be increased more reliably than the pressure-loss when the primary coolant passes through only the lower core support plate flow holes due to the resistance generated by diverting the flowing primary coolant. Accordingly, by arranging the pressure-loss adjusting member between the lower nozzle of a fuel assembly having a small pressure-loss and the lower core support plate, the flow rate of the primary coolant flowing in the fuel assembly can be made substantially the same as that of the primary coolant flowing in a fuel assembly having a large pressure-loss more reliably. As a result, the flow rate of the primary coolant to the fuel assemblies can be distributed more reliably.

Advantageously, in the pressure-loss adjusting member, the engagement holes and the pressure-loss adjusting holes are formed on a same plane.

According to the present invention, because the engagement hole and the pressure-loss adjusting hole are formed on a same plane, the pressure-loss adjusting member can be easily formed. As a result, the flow rate of the primary coolant to the fuel assemblies can be easily distributed.

Advantageously, in the pressure-loss adjusting member, when ends of legs formed in the lower nozzle are brought into contact with one surface of the pressure-loss adjusting member so that the positioning holes and the engagement holes communicate with each other, a shielding unit having a length shorter than a gap between the legs and a height lower than that of the legs is respectively provided in a portion positioned between adjacent ones of the plurality of legs.

According to the present invention, because the shielding unit is provided in the portion positioned between the legs formed in plural in the lower nozzle, when the primary coolant flows from the lower core support plate side to the lower nozzle, the flow of the primary coolant between the adjacent lower nozzles can be blocked by the shielding unit. Accordingly, it can be suppressed that the primary coolant having passed through the lower core support plate flows toward the lower nozzle having a decreased flow rate due to the arrangement of the pressure-loss adjusting member, and the flow rate of the primary coolant flowing in the fuel assemblies can be made substantially the same more reliably. As a result, the flow rate of the primary coolant to the fuel assemblies can be distributed more reliably.

Advantageously, the pressure-loss adjusting member further includes: a pressure-loss adjusting unit in which the pressure-loss adjusting holes are formed; and a fitting unit in which the engagement holes are formed, and a position thereof in a direction of inserting the positioning pin into the engagement hole is different from the position of a pressure-loss adjusting unit. The pressure-loss adjusting unit is formed to be away from the lower core support plate, when the positioning pins are inserted into the engagement holes.

According to the present invention, the pressure-loss adjusting hole is formed in the pressure-loss adjusting unit, and the engagement hole is formed in the fitting unit. The pressure-loss adjusting unit is formed to be away from the lower core support plate when the positioning pin is inserted into the engagement hole. Accordingly, the primary coolant having passed through the lower core support plate flow holes in the lower core support plate and flowing toward the lower nozzle can pass through the pressure-loss adjusting holes at a position closer to the lower nozzle. Therefore, the primary coolant immediately after the flow rate is decreased by increasing the pressure-loss can be caused to flow to the lower nozzle and the fuel assembly. Accordingly, the flow rate of the primary coolant flowing in a fuel assembly having a small pressure-loss can be decreased more reliably. As a result, the flow rate of the primary coolant to the fuel assemblies can be distributed more reliably.

According to another aspect of the present invention, a reactor includes: a lower nozzle having a plurality of nozzle flow holes through which a primary coolant for a fuel assembly can flow toward the fuel assembly, and a plurality of positioning holes, which are for positioning, formed therein and arranged at one end of the fuel assembly; a lower core support plate provided so that a plurality of the lower nozzles can be arranged thereon by inserting a plurality of positioning pins formed on one surface thereof into the positioning holes, and a plurality of lower core support plate flow holes that can cause the primary coolant to flow from a direction of a surface opposite to a surface on which the lower nozzle is formed toward the lower nozzle are formed therein; and the pressure-loss adjusting member of any one of described above, which is arranged between the lower nozzle arranged at one end of the fuel assembly having a relatively small pressure-loss and the lower core support plate by inserting the positioning pin into the engagement hole at a position between the lower nozzle and the lower core support plate.

According to the present invention, because the pressure-loss adjusting member is arranged between the lower nozzle arranged at one end of the fuel assembly having a relatively small pressure-loss and the lower core support plate, at the time of arranging the pressure-loss adjusting member, the pressure-loss adjusting member can be easily arranged by using the positioning pin on the lower core support plate and the engagement hole formed in the pressure-loss adjusting member. Further, because the pressure-loss adjusting member is arranged between the lower nozzle arranged at one end of the fuel assembly having a relatively small pressure-loss and the lower core support plate, the flow rate of the primary coolant flowing in the fuel assembly can be made substantially the same as that of the primary coolant flowing in a fuel assembly having a relatively large pressure-loss. That is, when the primary coolant flows from the lower core support plate toward the lower nozzle, the pressure-loss adjusting member can cause the primary coolant to flow in a state with the pressure-loss being increased, as compared with the case that the pressure-loss adjusting member is not arranged. Therefore, by arranging the pressure-loss adjusting member between the lower nozzle arranged at one end of the fuel assembly having a relatively small pressure-loss and the lower core support plate, it can be suppressed that at the time of flowing from the lower core support plate toward the fuel assembly, the primary coolant flows more to the fuel assembly having a small pressure-loss. Accordingly, the flow rate of the primary coolant flowing to the fuel assemblies can be made substantially the same, regardless of the magnitude of the pressure-loss in the fuel assemblies. As a result, the flow rate of the primary coolant to the fuel assemblies can be easily distributed.

### [Advantageous Effects of Invention]

The pressure-loss adjusting member according to the present invention can easily distribute the flow rate of the primary coolant to the fuel assemblies. Further, the reactor according to the present invention can easily distribute the flow rate of the primary coolant to the fuel assemblies.

### [Brief Description of Drawings]

[FIG. 1] FIG. 1 is a schematic diagram of a reactor including a pressure-loss adjusting member according to a first embodiment of the present invention.
[FIG. 2] FIG. 2 is a sectional view along a line A-A in FIG. 1.
[FIG. 3] FIG. 3 is a detailed diagram of relevant parts of a lower core support plate shown in FIG. 1.
[FIG. 4] FIG. 4 is a perspective view on an upper surface side of a lower nozzle.
[FIG. 5] FIG. 5 is a perspective view on a lower surface side of the lower nozzle.
[FIG. 6] FIG. 6 is a perspective view on an upper surface side of the pressure-loss adjusting member according to the first embodiment.
[FIG. 7] FIG. 7 is a perspective view on a lower surface side of the pressure-loss adjusting member according to the first embodiment.
[FIG. 8] FIG. 8 is a perspective view of a state where the pressure-loss adjusting member shown in FIGS. 6 and 7 is arranged on the lower core support plate.
[FIG. 9] FIG. 9 is a sectional view of relevant parts shown in FIG. 8.
[FIG. 10] FIG. 10 is a perspective view of a pressure-loss adjusting member according to a second embodiment of the present invention.
[FIG. 11] FIG. 11 is a perspective view of a state where the pressure-loss adjusting member shown in FIG. 10 is arranged on a lower core support plate.
[FIG. 12] FIG. 12 is a perspective view of a pressure-loss adjusting member according to a third embodiment of the present invention.
[FIG. 13] FIG. 13 is a perspective view of a state where the pressure-loss adjusting member shown in FIG. 12 is arranged on a lower core support plate.
[FIG. 14] FIG. 14 is a sectional view of relevant parts shown in FIG. 13.
[FIG. 15] FIG. 15 is a perspective view of a modification of the pressure-loss adjusting member according to the first embodiment.
[FIG. 16] FIG. 16 is a sectional view of relevant parts shown in FIG. 15.

### [Description of Embodiments]

Exemplary embodiments of a pressure-loss adjusting member and a reactor according to the present invention will be explained below in detail with reference to the accompanying drawings. The present invention is not limited to the following embodiments. In addition, constituent elements in the following embodiments include elements replaceable by those skilled in the art, or substantially the same elements.

### [First embodiment]

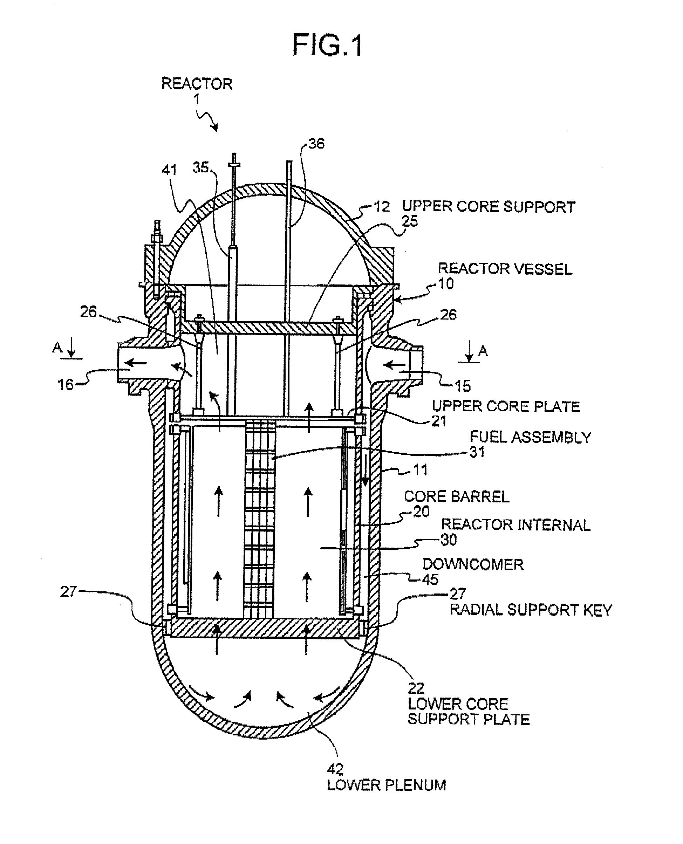

FIG. 1 is a schematic diagram of a reactor including a pressure-loss adjusting member according to a first embodiment of the present invention. In the following explanations, an upper part in an installed state of a reactor 1 at the time of use is designated as an upper part in respective units, and a lower part in the installed state of the reactor 1 at the time of use is designated as a lower part in the respective units. The reactor 1 shown in FIG. 1 is a pressurized water reactor in which a path for extracting energy is separated into a primary cooling system and a secondary cooling system. An outline of a nuclear power plant using the pressurized water reactor is explained below. In the pressurized water reactor, light water is used as a reactor primary coolant and a neutron moderator, and by providing a pressurizer (not shown) in the primary cooling system, which is a circulation path of light water, light water can be turned into high-temperature and high-pressure water, which does not boil in all over a reactor internal in the primary cooling system. In the primary cooling system, the high-temperature and high-pressure water is fed to a steam generator (not shown), which is a part that performs heat exchange with the secondary cooling system, to perform heat exchange with light water circulating in the secondary cooling system. In the secondary cooling system, steam is generated due to heat exchange, and the generated steam is fed to a turbine generator (not shown), to generate power by the turbine generator.

In the reactor 1 according to the first embodiment, which is provided as the pressurized water reactor, a reactor vessel 10 provided as a pressure vessel includes a reactor vessel body 11 and a reactor vessel lid 12 mounted on the reactor vessel body 11 and capable of being opened and closed with respect to the reactor vessel body 11, so that core internals can be inserted therein. The reactor vessel body 11 is formed substantially in a cylindrical shape with an upper part thereof in a vertical direction at the time of installation of the reactor 1 being opened and a lower part thereof being in a spherical shape and closed. An inlet nozzle 15 and an outlet nozzle 16 for feeding and discharging light water (a primary coolant) as primary cooling water, which is used in the primary cooling system, are formed near an upper end thereof, which is an end on the open side.

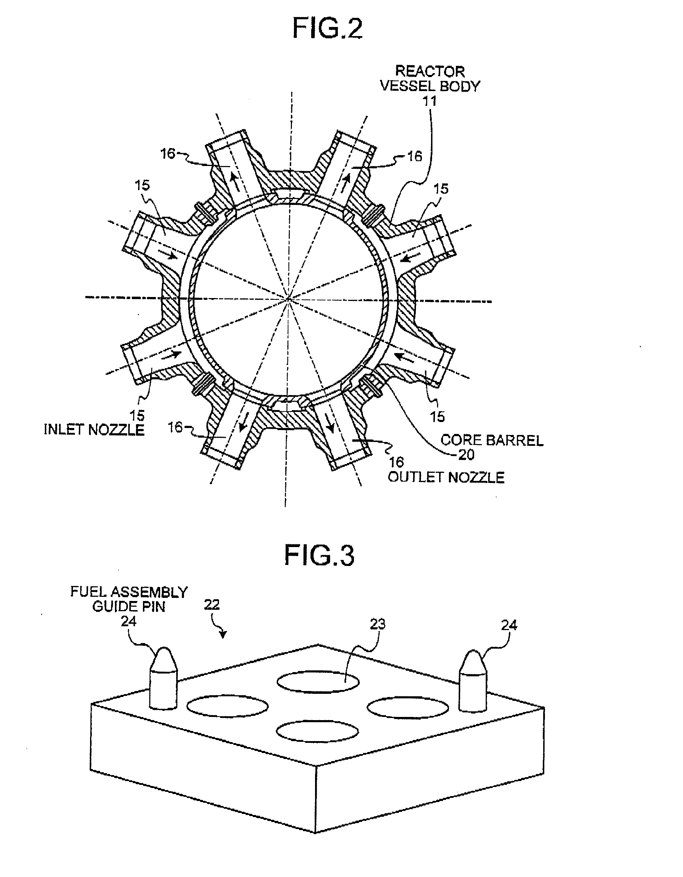

FIG. 2 is a sectional view along a line A-A in FIG. 1. Four inlet nozzles 15 and four outlet nozzles 16 are formed in the reactor vessel body 11 and eight nozzles in total are arranged with equal intervals on the outer periphery of the reactor vessel body 11 formed substantially in the cylindrical shape. In more detail, the inlet nozzles 15 and the outlet nozzles 16 are arranged in such a manner that two of the same type of nozzles are continuously arranged, and when two nozzles of the same type continuously arranged are designated as one set, the set of nozzles are alternately arranged.

Below the inlet nozzles 15 and the outlet nozzles 16 in the reactor vessel body 11, a core barrel 20 formed substantially in a cylindrical shape is arranged, and the core barrel 20 is arranged with a predetermined gap from an inner surface of the reactor vessel body 11. That is, the core barrel 20 formed substantially in the cylindrical shape has a smaller diameter than that of the reactor vessel body 11 formed substantially in the cylindrical shape, and by arranging the core barrel 20 in the reactor vessel body 11 so that central axes of both cylindrical forms match with each other, there is a gap between the core barrel 20 and the inner surface of the reactor vessel body 11.

An upper core plate 21 formed in a disk shape and having many flow holes (not shown) formed therein is connected to an upper part of the core barrel 20. A lower core support plate 22 similarly formed in a disk shape is connected to a lower part of the core barrel 20, and lower core support plate flow holes 23 (see FIG. 3), which are flow holes in the lower core support plate 22, are formed in plural. An upper core support 25 positioned in the upper part of the core barrel 20 and formed in a disk shape is fixed inside of the reactor vessel body 11, and the upper core plate 21 is suspended from the upper core support 25 and supported via a plurality of reactor internal support rods 26. That is, the core barrel 20 connected to the upper core plate 21 is also suspended and supported by the upper core support 25 , because the upper core plate 21 is suspended and supported by the upper core support 25 via the reactor internal support rods 26. On the other hand, the lower core support plate 22 is positioned and held by a plurality of radial support keys 27 with respect to the inner surface of the reactor vessel body 11, and thus the core barrel 20 is positioned and held by the radial support keys 27 with respect to the inner surface of the reactor vessel body 11.

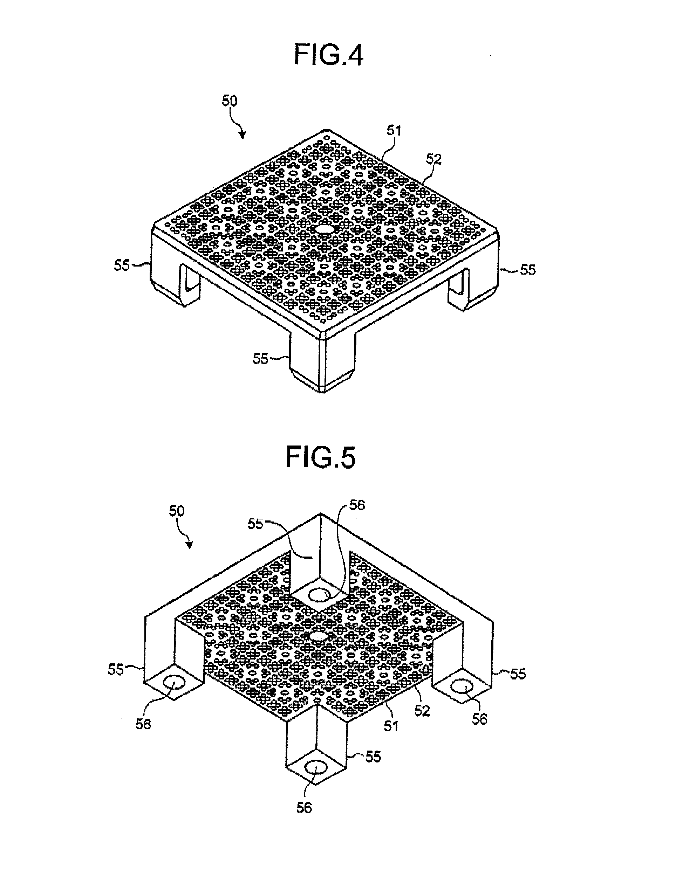

A reactor internal 30 includes the core barrel 20, the upper core plate 21, and the lower core support plate 22 provided in this manner, and many fuel assemblies 31 are arranged in the reactor internal 30. The fuel assembly 31 is formed by bundling a number of fuel rods in a reticular pattern by a support grid, with an upper nozzle (not shown) being fixed to an upper end thereof and a lower nozzle 50 (see FIG. 4) being fixed to a lower end thereof. The fuel assembly 31 also includes a control-rod guide tube into which a control rod is inserted, and an incore-instrumentation guide tube into which an incore-instrumentation detector is inserted, in addition to the fuel rods.

The upper core support 25 supports a number of control-rod-cluster guide tubes 35 and a number of incore-instrumentation guide tubes 36 in such a state that the contral-rod-cluster guide tubes 35 and the incore-instrumentation guide tubes 36 penetrate through the upper core support 25. Among these elements, the control-rod-cluster guide tube 35 is provided as a guide tube for a cluster-type control rod (not shown) in which a plurality of control rods are collectively driven, and a control-rod-cluster drive shaft extending from a control-rod drive unit (not shown) provided in the reactor vessel lid 12 is extended to the fuel assembly 31, passing in the control-rod-cluster guide tube 35. The control rod is fitted to a bottom end of the control-rod-cluster drive shaft and inserted into the control-rod guide tube included in the fuel assembly 31. Further, the incore-instrumentation guide tube 36 is provided as a guide tube for incore neutron instrumentation (not shown) for measuring neutrons in the reactor vessel 10, and a bottom end thereof is extended to the fuel assembly 31.

In the reactor vessel 10, a portion positioned above the reactor internal 30 and communicating with the outlet nozzle 16 is formed as an upper plenum 41, and a hemispherical space positioned below the reactor internal 30 and formed of the lower core support plate 22 and an inner surface of a spherical closed portion below the reactor vessel body 11 is formed as a lower plenum 42. A portion formed between the reactor vessel 10 and the core barrel 20 and communicating with the inlet nozzle 15 and the lower plenum 42 is formed as a downcomer 45. That is, the upper plenum 41 is sectioned by the core barrel 20, the upper core support 25, and the upper core plate 21, and communicates with the outlet nozzle 16 and also communicates with the reactor internal 30 via a number of flow holes formed on the upper core plate 21. The lower plenum 42 is sectioned by the lower core support plate 22 as a bottom of the core barrel 20 and the reactor vessel body 11, and communicates with the reactor internal 30 via a number of flow holes formed on the lower core support plate 22. The downcomer 45 is sectioned by the reactor vessel body 11 and a side wall of the core barrel 20, with an upper part thereof communicating with the inlet nozzle 15 and a lower part thereof communicating with the lower plenum 42.

FIG. 3 is a detailed diagram of relevant parts of the lower core support plate shown in FIG. 1. A number of lower core support plate flow holes, which are flow holes bored in a thickness direction of the plate, that is, in a vertical direction, are formed on the lower core support plate 22. Further, the lower core support plate 22 is provided so that a number of the fuel assemblies 31 can be arranged thereon, and fuel assembly guide pins 24 used for the arrangement of the fuel assemblies 31 are provided on an upper surface of the lower core support plate 22, which is a surface for arranging the fuel assemblies 31.

The fuel assembly guide pin 24 protrudes upward on an upper surface of the lower core support plate 22 in a round-bar shape, and a top end is formed in a tapered shape and tapered off to a point. The fuel assembly guide pin 24 can be provided in such a manner that the fuel assembly 31 can be arranged at an appropriate position by being used for positioning of the lower nozzle 50 at the arrangement position, which is fixed to the lower end of the fuel assembly 31, at the time of arranging the fuel assembly 31 on the lower core support plate 22. That is, the fuel assembly guide pin 24 can be provided so that the lower nozzle 50 can be arranged at an appropriate position in a portion where the lower nozzle 50 is arranged on the lower core support plate 22.

FIG. 4 is a perspective view on an upper surface side of the lower nozzle. FIG. 5 is a perspective view on a lower surface side of the lower nozzle. The lower nozzle 50 arranged at the lower end of the fuel assembly 31 includes a nozzle portion 51 formed substantially in a rectangular plate shape, and a plurality of legs 55 formed on the nozzle portion 51. A number of nozzle flow holes 52 penetrating in a thickness direction of the plate are formed in the nozzle portion 51. The legs 55 are provided on one surface of the nozzle portion 51, and four legs 55 protrudes respectively from four corners on the surface in the thickness direction of the nozzle portion 51 with a same height.

A positioning hole 56 formed in a height direction of the leg 55 is formed at an end opposite to the end on the nozzle portion 51 side is formed in the leg 55. The positioning hole 56 opens at the end of the leg 55 as a hole, into which the fuel assembly guide pin 24 formed on the lower core support plate 22 is inserted, and is formed with a predetermined depth. The lower nozzle 50 formed in this manner is fixed to the lower end of the fuel assembly 31 in such an orientation that the leg 55 side is positioned on the lower side and a surface of the nozzle portion 51 on which the leg is formed faces upward, and the fuel assembly 31 is mounted on a surface opposite to the surface on the leg 55 side in the nozzle portion 51.

When the lower nozzle 50 is mounted on the lower core support plate 22 in such an orientation that the leg 55 side is positioned on the lower side, the fuel assembly guide pin 24 formed on the lower core support plate 22 are inserted into two positioning holes 56, respectively, of four positioning holes 56 formed in the four legs 55. That is, the legs 55 protrude from four corners of the nozzle portion 51 formed in a rectangular shape, and the fuel assembly guide pins 24 are respectively inserted into two positioning holes 56 formed in the legs 55 protruding from two corners having a diagonal relationship in the nozzle portion 51.

With the above arrangements, the two fuel assembly guide pins 24 formed in a portion where the lower nozzle 50 is arranged on the lower core support plate 22 and the two positioning holes 56 formed in the two legs 55 positioned in the diagonal relationship in the nozzle portion 51 of the lower nozzle 50 have substantially the same positional relationship relative to each other. When the lower nozzle 50 is arranged on the lower core support plate 22, the two fuel assembly guide pins 24 are inserted into the two positioning holes 56 to arrange the lower nozzle 50.

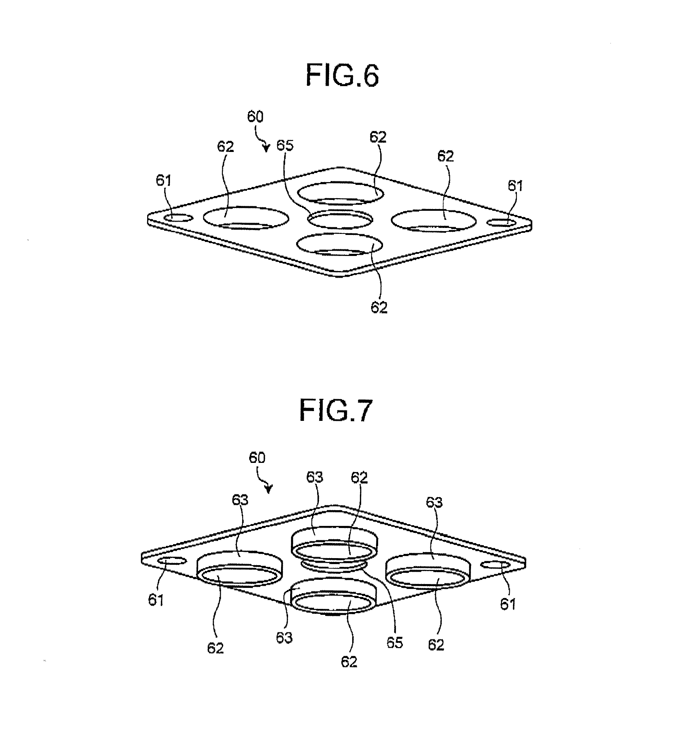

FIG. 6 is a perspective view on an upper surface side of the pressure-loss adjusting member according to the first embodiment. The lower nozzle 50 and the lower core support plate 22 are provided in such a manner that the lower nozzle 50 can be arranged on the lower core support plate 22 with a pressure-loss adjusting member 60 being located therebetween. The pressure-loss adjusting member 60 is explained below. The pressure-loss adjusting member 60 is formed substantially in a rectangular thin plate-like shape, and engagement holes 61 penetrating in a thickness direction of the plate are formed near two corners forming one of two opposing corners.

The engagement holes 61 are provided as holes into which the fuel assembly guide pins 24 formed on the lower core support plate 22 are respectively inserted, and are formed in the same positional relationship as a relative positional relationship between the positioning holes 56 formed in plural in the lower nozzle 50. That is, the two engagement holes 61 formed near the two corners of the pressure-loss adjusting member 60 are formed in the same positional relationship as the relative positional relationship between the positioning holes 56 into which the two fuel assembly guide pins 24 are inserted at the time of arranging the lower nozzle 50, of the four positioning holes 56 formed in the lower nozzle 50. Accordingly, two fuel assembly guide pins 24 that can be inserted into the positioning holes 56 in one lower nozzle 50, of the fuel assembly guide pins 24 formed in plural on the lower core support plate 22, can be inserted into the two engagement holes 61 formed in the pressure-loss adjusting member 60.

Further, the pressure-loss adjusting member 60 further includes a plurality of pressure-loss adjusting holes 62 penetrating in a thickness direction of the plate of the pressure-loss adjusting member 60. Because the pressure-loss adjusting member 60 is formed in a plate-like shape, the engagement holes 61 and the pressure-loss adjusting holes 62 are formed on the same plane.

The pressure-loss adjusting holes 62 are formed in the same number as that of the lower core support plate flow holes 23 at positions corresponding to the lower core support plate flow holes 23 in a state with the fuel assembly guide pins 24 on the lower core support plate 22 being inserted into the engagement holes 61. That is, the pressure-loss adjusting holes 62 in the pressure-loss adjusting member 60 are formed in the same positional relationship as that of between the lower core support plate flow holes 23 and the fuel assembly guide pins 24 positioned in the range of the pressure-loss adjusting member 60 when the pressure-loss adjusting member 60 is arranged on the lower core support plate 22 by inserting the fuel assembly guide pins 24 into the engagement holes 61. The pressure-loss adjusting hole 62 formed in this manner has a smaller opening area than that of the lower core support plate flow hole 23 formed at a position corresponding to each of the pressure-loss adjusting holes 62.

FIG. 7 is a perspective view on a lower surface side of the pressure-loss adjusting member according to the first embodiment. A cylindrical fitting tube 63 is formed with an inner diameter being the same as the diameter of the pressure-loss adjusting hole 62 in a portion on one surface of the pressure-loss adjusting member 60 where the pressure-loss adjusting holes 62 are formed. That is, the fitting tube 63 is provided in such a manner that an inner portion thereof is the pressure-loss adjusting hole 62. An outer diameter of the fitting tube 63 is formed with a diameter slightly smaller than that of the lower core support plate flow hole 23. An instrumentation hole 65, through which an instrumentation part to be used at the time of operating the reactor 1 is inserted, is formed near a central portion as viewed in plan view in the pressure-loss adjusting member 60 formed in this manner.

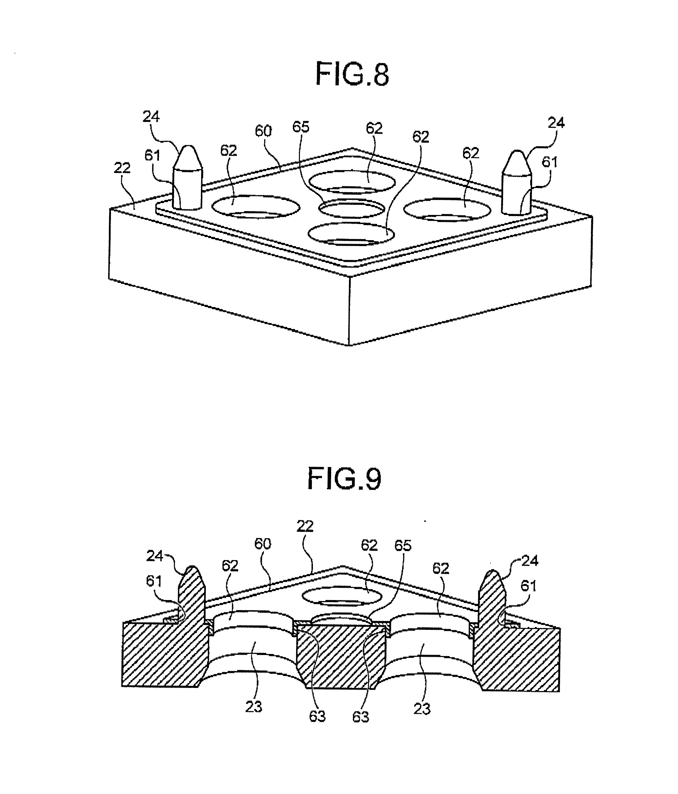

FIG. 8 is a perspective view of a state where the pressure-loss adjusting member shown in FIGS. 6 and 7 is arranged on the lower core support plate. FIG. 9 is a sectional view of relevant parts shown in FIG. 8. When the pressure-loss adjusting member 60 formed in this manner is arranged on the lower core support plate 22, the fuel assembly guide pins 24 on the lower core support plate 22 are to be inserted into the two engagement holes 61 formed in the pressure-loss adjusting member 60, in such an orientation that the fitting tube 63 faces the lower core support plate 22, and the pressure-loss adjusting member 60 is arranged on the lower core support plate 22 in a state with the fuel assembly guide pins 24 being inserted into the engagement holes 61. Because the fuel assembly guide pins 24 and the lower core support plate flow holes 23, and the engagement holes 61 and the pressure-loss adjusting holes 62 are formed in the same positional relationship, when the pressure-loss adjusting member 60 is arranged on the lower core support plate 22 by inserting the fuel assembly guide pins 24 into the engagement holes 61, the pressure-loss adjusting holes 62 are overlapped on the lower core support plate flow holes 23. At this time, the pressure-loss adjusting holes 62 are formed in the pressure-loss adjusting member 60, and the pressure-loss adjusting member 60 is arranged such that the fitting tube 63 having a smaller outer diameter than the diameter of the lower core support plate flow hole 23 faces the lower core support plate 22, and thus the fitting tube 63 enters into the lower core support plate flow hole 23 and is fitted to the lower core support plate flow hole 23. Accordingly, the pressure-loss adjusting holes 62 communicate with the lower core support plate flow holes 23.

In this manner, the pressure-loss adjusting hole 62 formed inside of the fitting tube 63 fitted to the lower core support plate flow hole 23 has a smaller opening area than that of the lower core support plate flow hole 23. Further, when the pressure-loss adjusting hole 62 and the lower core support plate flow hole 23 communicate with each other by fitting the fitting tube 63 to the lower core support plate flow hole 23, because the lower core support plate flow hole 23 opens according to the opening area of the pressure-loss adjusting hole 62, the lower core support plate flow hole 23 has substantially a smaller opening area.

Further, because the pressure-loss adjusting member 60 is formed by a thin plate, when the pressure-loss adjusting member 60 is arranged on the lower core support plate 22 by inserting the fuel assembly guide pins 24 into the engagement holes 61, the fuel assembly guide pins 24 penetrate the engagement holes 61 and protrude upward from the pressure-loss adjusting member 60. Therefore, the lower nozzle 50 can be arranged from above of the pressure-loss adjusting member 60 arranged on the lower core support plate 22. In this case, the fuel assembly guide pins 24 penetrating the engagement holes 61 are inserted into two positioning holes 56 of the four positioning holes 56 to arrange the lower nozzle 50 on the pressure-loss adjusting member 60, in such an orientation that ends of the four legs 55 of the lower nozzle 50 can be brought into contact with near the four corners of the pressure-loss adjusting member 60 formed in a rectangular shape. That is, the ends of the legs 55 formed in plural are arranged in contact with one surface of the pressure-loss adjusting member 60 so that the positioning holes 56 and the engagement holes 61 communicate with each other.

Because the lower nozzle 50 can be arranged on the lower core support plate 22 via the pressure-loss adjusting member 60, the fuel assembly 31 fixed with the lower nozzle 50 at the lower end thereof can be arranged on the lower core support plate 22 via the pressure-loss adjusting member 60 from above of the pressure-loss adjusting member 60 in a state with the pressure-loss adjusting member 60 being arranged on the lower core support plate 22. Further, because a plurality of the fuel assembly guide pins 24 are formed on the lower core support plate 22, a number of the fuel assemblies 31 can be arranged on the lower core support plate 22.

At the time of operating the reactor 1, light water flows around the fuel assemblies 31. However, the pressure-loss when light water flows may be different according to the fuel assembly 31. The pressure-loss adjusting member 60 is not arranged with respect to all the fuel assemblies 31 arranged in plural on the lower core support plate 22, but arranged between the lower nozzle 50 fixed to the fuel assembly 31 having a relatively small pressure-loss and the lower core support plate 22.

The pressure-loss adjusting member 60 and the reactor 1 according to the first embodiment have the configuration described above, and an effect thereof is explained below. When the reactor 1 is operated, while circulating light water used as a primary coolant and a neutron moderator, a fissile material such as uranium 235 or plutonium contained in the fuel assembly 31 as a fuel constituting the fuel assembly 31 is subjected to a nuclear fission reaction. When the nuclear fission reaction is carried out in this manner, a control-rod drive unit provided in the reactor vessel lid 12 moves a control-rod-cluster drive shaft, to adjust an insertion amount of the control rod into the fuel assembly 31. In this manner, the nuclear fission reaction in the reactor internal 30 is controlled. When the fissile material fissions, thermal energy is generated. However, because circulating light water is filled around the fuel assembly 31, the thermal energy is transmitted to light water around the fuel assembly 31. Accordingly, light water filled in the reactor vessel 10 is heated. High-temperature light water heated by the thermal energy generated at the time of the nuclear fission reaction in this way is discharged from the outlet nozzle 16, and fed to a steam generator.

That is, the fissile material contained in the fuel assembly 31 fissions to discharge neutrons, and light water used as the neutron moderator and the primary coolant in the primary cooling system reduces the kinetic energy of the discharged high-speed neutrons to turn the neutrons into thermal neutrons, thereby facilitating new nuclear fission and drawing generated heat to cool the fuel assembly 31.

The control rod is provided so that the number of neutrons generated in the reactor internal 30 can be adjusted by absorbing neutrons discharged at the time of nuclear fission of the fissile material. For example, when the insertion amount of the control rod into the fuel assembly 31 is increased, the amount of neutrons absorbed by the control rod increases, thereby decreasing the number of neutrons that cause nuclear fission of the fissile material. On the contrary, when the control rod is moved in a pulling-out direction to decrease the insertion amount of the control rod into the fuel assembly 31, because the amount of neutrons absorbed by the control rod decreases, the number of neutrons that cause nuclear fission of the fissile material increases. Accordingly, the frequency of nuclear fission of the fissile material can be changed. Therefore, at the time of operating the reactor 1, a nuclear fission reaction is controlled by adjusting the insertion amount of the control rod, to adjust the amount of thermal energy generated due to the nuclear fission reaction.

At the time of operating the reactor 1, light water is circulated in the primary cooling system. The light water flows into the reactor vessel body 11 from the four inlet nozzles 15, flows downward in the downcomer 45 communicating with the inlet nozzles to reach the lower plenum 42, and then changes the flow direction to upward due to the spherical inner surface of the lower plenum 42. Accordingly, light water moves upward from the lower plenum 42, and after having passed through the lower core support plate 22, flows into the reactor internal 30. Light water flowing into the reactor internal 30 absorbs thermal energy generated from the fuel assemblies 31 arranged in the reactor internal 30 to cool the fuel assemblies 31, and moves up to the upper core plate 21 in a state of high-temperature light water. The high-temperature light water having reached the upper core plate 21 passes through the upper core plate 21 and moves up to the upper plenum 41, and is discharged from the reactor vessel body 11 through the outlet nozzles 16.

In the reactor vessel body 11, light water circulating in the primary cooling system passes through the lower core support plate 22 and the upper core plate 21, and flows from the lower plenum 42 to the upper plenum 41. When passing through the lower core support plate 22, light water passes through the lower core support plate flow holes 23 formed on the lower core support plate 22. Accordingly, light water flows from the lower plenum 42 to the reactor internal 30, and flows around the fuel assemblies 31.

The lower nozzle 50 fixed to the fuel assembly 31 is arranged on the lower core support plate 22, thereby providing fuel assemblies 31 in the reactor internal 30 in plural. However, there are fuel assemblies 31 in which the pressure-loss adjusting member 60 is arranged between the lower nozzle 50 and the lower core support plate 22 and the fuel assemblies 31 that does not include the pressure-loss adjusting member 60, according to the fuel assembly 31. Therefore, when light water having passed through the lower core support plate 22 flows to the fuel assemblies 31, the flowing state is different according to the presence of the pressure-loss adjusting member 60.

The fuel assembly 31 in which the pressure-loss adjusting member 60 is not arranged between the lower nozzle 50 and the lower core support plate 22 is explained first. Light water having passed through the lower core support plate flow holes 23 in the lower core support plate 22 moves up directly to the nozzle portion 51 of the lower nozzle 50. Light water having reached the nozzle portion 51 passes through the nozzle flow holes 52 formed in the nozzle portion 51 in plural, and flows around the fuel assemblies 31.

On the contrary, in the fuel assembly 31 in which the pressure-loss adjusting member 60 is arranged between the lower nozzle 50 and the lower core support plate 22, light water having passed through the lower core support plate flow holes 23 in the lower core support plate 22 passes through the pressure-loss adjusting holes 62 in the pressure-loss adjusting member 60 communicating with the lower core support plate flow holes 23. However, because the opening area of the pressure-loss adjusting hole 62 becomes smaller than that of the lower core support plate flow hole 23, the resistance on light water at the time of flowing through the lower core support plate flow holes 23 and the pressure-loss adjusting holes 62 increases than the resistance at the time of passing through only the lower core support plate flow holes 23. Therefore, when light water passes through the lower core support plate flow holes 23 and the pressure-loss adjusting holes 62, light water does not flow so easily as compared with a case that light water passes through only the lower core support plate flow holes 23, that is, a pressure-loss when light water flows increases. In this way, light water having passed through the lower core support plate flow holes 23 and the pressure-loss adjusting holes 62 in a state that the pressure-loss is large and light water is hard to flow moves up and flows to the nozzle portion 51 of the lower nozzle 50, passes through the nozzle flow holes 52 formed in the nozzle portion 51 in plural, and flows around the fuel assemblies 31.

The pressure-loss adjusting member 60 is arranged between the lower nozzle 50 and the lower core support plate 22 of the fuel assembly 31 having a relatively small pressure-loss. When light water having passed through the lower core support plate 22 passes through the pressure-loss adjusting member 60 and flows to the lower nozzle 50, the pressure-loss increases as compared with a case that light water having passed through the lower core support plate 22 flows directly to the lower nozzle 50. Therefore, light water having passed through the lower core support plate 22 and the pressure-loss adjusting member 60 and having a large pressure-loss flows to the fuel assembly 31 having a small pressure-loss. On the contrary, light water having passed through only the lower core support plate 22 and having a small pressure-loss flows to the fuel assembly 31 having a large pressure-loss.

Therefore, when the pressure-loss when light water flows from the lower plenum 42 to the fuel assembly 31 is considered in a comprehensive manner, the comprehensive pressure-loss in the fuel assembly 31 having a small pressure-loss and that in the fuel assembly 31 having a large pressure-loss are substantially the same. Accordingly, light water flowing from the lower plenum 42 to the reactor internal 30 does not flow much to the fuel assembly 31 having a small pressure-loss, and is distributed to a plurality of the fuel assemblies 31, and flows to the fuel assemblies 31 substantially uniformly. Light water flowing substantially uniformly to the fuel assemblies 31 uniformly cools the fuel assemblies 31 or uniformly generates thermal neutrons. Therefore, the reactor 1 can be stably operated due to the effect of light water.

In the pressure-loss adjusting member 60, because the engagement holes 61 into which the fuel assembly guide pins 24 on the lower core support plate 22 can be inserted are formed in plural in the same positional relationship as the relative positional relationship between the positioning holes 56 formed in plural in the lower nozzle 50, the pressure-loss adjusting member 60 can be easily arranged on the lower core support plate 22 by using the fuel assembly guide pins 24 and the engagement holes 61. Further, the pressure-loss adjusting member 60 includes the pressure-loss adjusting holes 62 that enable light water flowing around the fuel assemblies 31 to pass therethrough in a state having a larger pressure-loss than that of at the time of passing through only the lower core support plate flow holes 23. Therefore, when light water flows from the lower core support plate 22 having the pressure-loss adjusting member 60 arranged thereon toward the lower nozzle 50, light water having passed through the lower core support plate flow holes 23 flows, passing through the pressure-loss adjusting holes 62. Therefore, light water flows in a state having a larger pressure-loss, as compared with a case that the pressure-loss adjusting member 60 is not arranged on the lower core support plate 22. Accordingly, by arranging the pressure-loss adjusting member 60 between the lower nozzle 50 of the fuel assembly 31 having a small pressure-loss and the lower core support plate 22, the pressure-loss of light water flowing to the fuel assembly 31 can be increased to decrease the flow rate. Therefore, the flow rate of light water flowing in this fuel assembly 31 can be substantially the same as that of light water flowing in the fuel assembly 31 having a large pressure-loss. As a result, the flow rate of light water to the fuel assemblies 31 can be easily distributed.

Further, the pressure-loss adjusting hole 62 has a smaller opening area than that of the lower core support plate flow hole 23 through which light water flows toward the lower nozzle 50. Therefore, the pressure-loss when light water passes through the lower core support plate flow holes 23 and the pressure-loss adjusting holes 62 can be reliably increased more than that of when light water passes through only the lower core support plate flow holes 23. Accordingly, by arranging the pressure-loss adjusting member 60 between the lower nozzle 50 of the fuel assembly 31 having a small pressure-loss and the lower core support plate 22, the flow rate of light water flowing in the fuel assembly 31 can be substantially the same as that of light water flowing in the fuel assembly 31 having a large pressure-loss more reliably. As a result, the flow rate of light water to the fuel assembly 31 can be distributed more reliably.

Because the pressure-loss adjusting member 60 is formed in a plate-like shape and the engagement holes 61 and the pressure-loss adjusting holes 62 are formed on the same plane, the pressure-loss adjusting member 60 can be easily formed. As a result, the flow rate of light water to the fuel assemblies 31 can be distributed more reliably.

Because the pressure-loss adjusting holes 62 are formed in the same number as that of the lower core support plate flow holes 23 at positions corresponding to the lower core support plate flow holes 23, and with a smaller opening area than that of the lower core support plate flow holes 23, the pressure-loss when light water flows from the lower core support plate 22 on which the pressure-loss adjusting member 60 is arranged toward the lower nozzle 50 can be increased more reliably. Therefore, the flow rate of light water flowing in the fuel assembly 31 having a small pressure-loss can be made substantially the same as that of light water flowing in the fuel assembly 31 having a large pressure-loss more reliably. As a result, the flow rate of light water to the fuel assembly 31 can be distributed more reliably.

In the reactor 1 according to the first embodiment, the pressure-loss adjusting member 60 is arranged between the lower nozzle 50 arranged at one end of the fuel assembly 31 having a relatively small pressure-loss and the lower core support plate 22. Therefore, at the time of arranging the pressure-loss adjusting member 60, the pressure-loss adjusting member 60 can be easily arranged by using the fuel assembly guide pins 24 and the engagement holes 61. Further, in the reactor 1 according to the first embodiment, because the pressure-loss adjusting member 60 is arranged between the lower nozzle 50 arranged at one end of the fuel assembly 31 having a relatively small pressure-loss and the lower core support plate 22, the flow rate of light water flowing in the fuel assembly 31 can be made substantially the same as that of light water flowing in the fuel assembly 31 having a relatively large pressure-loss. That is, when light water flows from the lower core support plate 22 toward the lower nozzle 50, the pressure-loss adjusting member 60 can cause light water to flow in a state with a large pressure-loss, as compared with a case that the pressure-loss adjusting member 60 is not arranged. Therefore, by arranging the pressure-loss adjusting member 60 between the lower nozzle 50 arranged at one end of the fuel assembly 31 having a relatively small pressure-loss and the lower core support plate 22, it can be suppressed that light water flows much to the fuel assembly 31 having a small pressure-loss, when light water flows from the lower core support plate 22 toward the fuel assembly 31. Accordingly, the flow rate of light water flowing to the fuel assemblies 31 can be made substantially the same, regardless of the magnitude of the pressure-loss in the fuel assemblies 31.

### [Second embodiment]

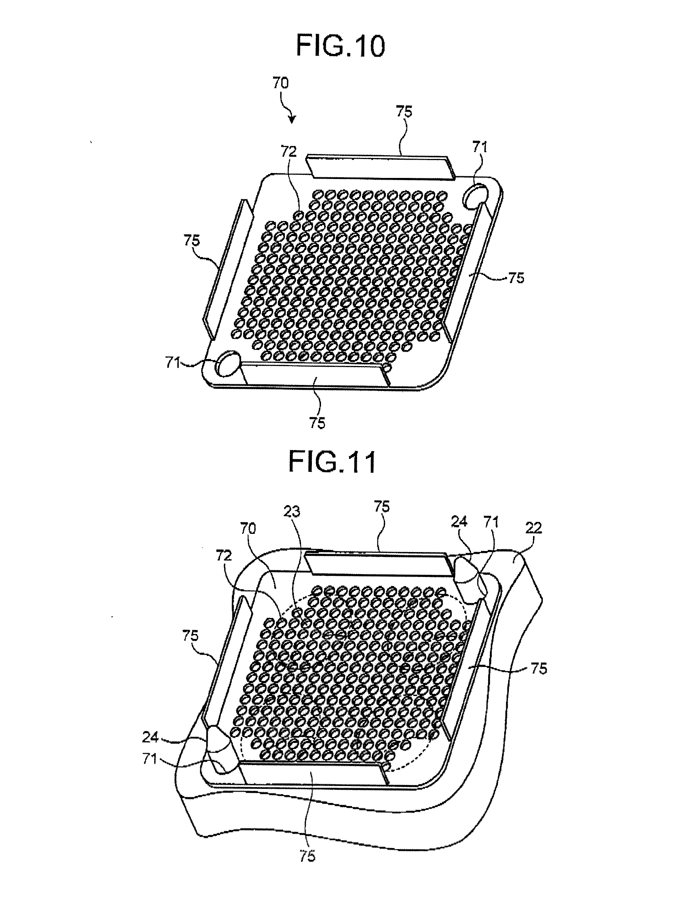

A pressure-loss adjusting member 70 according to a second embodiment of the present invention has substantially the same configuration as that of the pressure-loss adjusting member 60 according to the first embodiment, but is different in that a shielding unit 75 is provided in the pressure-loss adjusting member 70. Other configurations of the second embodiment are identical to those of the first embodiment, and thus explanations thereof will be omitted and like constituent elements are denoted by like reference signs. FIG. 10 is a perspective view of the pressure-loss adjusting member according to the second embodiment. The pressure-loss adjusting member 70 according to the second embodiment is formed substantially in a rectangular thin plate-like shape, and engagement holes 71 are formed near two corners forming one of opposing corners, as in the pressure-loss adjusting member 60 according to the first embodiment. Pressure-loss adjusting holes 72 are also formed in the pressure-loss adjusting member 70 according to the second embodiment. However, the pressure-loss adjusting holes 72 are provided by forming a number of holes having a relatively small diameter, different from the pressure-loss adjusting holes 62 formed in the pressure-loss adjusting member 60 according to the first embodiment. That is, the pressure-loss adjusting holes 72 are provided by forming a number of holes having a diameter considerably smaller than that of the lower core support plate flow holes 23.

Further, in the pressure-loss adjusting member 70 formed substantially in a rectangular shape, the shielding unit 75 is respectively provided on four sides. The shielding unit 75 is specifically explained. When the pressure-loss adjusting member 70 is arranged between the lower nozzle 50 and the lower core support plate 22, four legs 55 of the lower nozzle 50 are positioned first near the four corners of the pressure-loss adjusting member 70, and ends of the legs 55 are brought into contact with one surface of the pressure-loss adjusting member 70 so that the positioning holes 56 and engagement holes 71 communicate with each other.

The shielding unit 75 is provided in a portion positioned between the adjacent legs 55 in a state with the legs 55 of the lower nozzle 50 coming in contact with near the four corners of the pressure-loss adjusting member 70, and is formed in a plate-like shape protruding toward the lower nozzle 50 in this state. Further, the shielding unit 75 protruding toward the lower nozzle 50 has a length shorter than a gap between the legs 55 and a height lower than that of the leg 55.

The pressure-loss adjusting member 70 according to the second embodiment has the configuration described above, and an effect thereof is explained below. FIG. 11 is a perspective view of a state where the pressure-loss adjusting member 70 shown in FIG. 10 is arranged on a lower core support plate. When the pressure-loss adjusting member 70 according to the second embodiment is to be arranged on the lower core support plate 22, the fuel assembly guide pins 24 on the lower core support plate 22 are inserted into the engagement holes 71 in the pressure-loss adjusting member 70, in such an orientation that a surface of the pressure-loss adjusting member 70 on which the shielding units 75 protrudes faces an opposite side to the lower core support plate 22. Accordingly, the pressure-loss adjusting member 70 is arranged on the lower core support plate 22 in an orientation with the shielding units 75 protruding in the same direction as that of the fuel assembly guide pins 24.

The pressure-loss adjusting holes 72 formed in the pressure-loss adjusting member 70 are provided by forming a number of holes having a relatively small diameter, different from the pressure-loss adjusting holes 62 formed in the pressure-loss adjusting member 60 according to the first embodiment. Therefore, when the pressure-loss adjusting member 70 is arranged on the lower core support plate 22, a part of the pressure-loss adjusting holes 72 is blocked by the lower core support plate 22. In this case, the blocked pressure-loss adjusting holes 72 do not function as holes communicating with the lower core support plate flow holes 23, and thus the opening area of the entire pressure-loss adjusting holes 72 decreases substantially, thereby decreasing the effective opening area. Therefore, the pressure-loss adjusting holes 72 open in such a state that the total effective opening area is smaller than the total opening area of a plurality of the lower core support plate flow holes 23 positioned in a portion where the pressure-loss adjusting member 70 is arranged, of the lower core support plate flow holes 23 formed in plural in the lower core support plate 22.

When the pressure-loss adjusting member 70 is arranged between the lower nozzle 50 and the lower core support plate 22, the fuel assembly guide pins 24 on the lower core support plate 22 are inserted into and penetrate the engagement holes 71, and the lower nozzle 50 is arranged so that the penetrating fuel assembly guide pins 24 are inserted into the positioning holes 56. The pressure-loss adjusting member 70 is arranged between the lower nozzle 50 arranged at one end of the fuel assembly 31 having a relatively small pressure-loss and the lower core support plate 22, as in the pressure-loss adjusting member 60 according to the first embodiment.

When the lower nozzle 50 is arranged in a state with the pressure-loss adjusting member 70 being arranged on the lower core support plate 22, the legs 55 of the lower nozzle 50 are brought into contact with near the four corners of the pressure-loss adjusting member 70. However, the shielding units 75 are provided between the corners of the pressure-loss adjusting member 70. Therefore, when the lower nozzle 50 is arranged in this manner, the shielding units 75 are positioned between the adjacent legs 55 of the lower nozzle 50, to block the space between the legs 55.

With the above arrangements, when the reactor 1 is operated in the state with the pressure-loss adjusting member 70 being arranged between the lower nozzle 50 and the lower core support plate 22 and light water flows from the lower plenum 42 toward the fuel assembly 31, passing through the lower core support plate flow holes 23 in the lower core support plate 22, a part of light water having passed through the lower core support plate flow holes 23 is blocked by the pressure-loss adjusting member 70. That is, although many pressure-loss adjusting holes 72 are provided in the pressure-loss adjusting member 70, the total effective opening area becomes smaller than that of the lower core support plate flow holes 23 due to the arrangement of the pressure-loss adjusting member 70 on the lower core support plate 22. That is, when light water passes through the lower core support plate flow holes 23 and the pressure-loss adjusting holes 72, the resistance increases to increase the pressure-loss than a case that light water passes through only the lower core support plate flow holes 23.

Therefore, the pressure-loss when light water flows from the lower plenum 42 to the fuel assembly 31 is considered in a comprehensive manner, the comprehensive pressure-loss becomes substantially the same in the fuel assembly 31 having a small pressure-loss and provided with the pressure-loss adjusting member 70 and in the fuel assembly 31 having a large pressure-loss and without the pressure-loss adjusting member 70. Accordingly, light water flowing from the lower plenum 42 to the reactor internal 30 does not flow much to the fuel assembly 31 having a small pressure-loss, but is distributed to a plurality of the fuel assemblies 31 and flows to the fuel assemblies 31 substantially uniformly.

Further, the shielding units 75 are formed in the pressure-loss adjusting member 70, to block the space between the legs 55 of the lower nozzle 50. Therefore, the space between the pressure-loss adjusting member 70 and the lower nozzle 50 is blocked from outside of the space. Therefore, when light water flows from the lower plenum 42 toward the fuel assembly 31, passing through the lower core support plate flow holes 23 in the lower core support plate 22, light water hardly flows in and out between the space between the pressure-loss adjusting member 70 and the lower nozzle 50 and the outside of the space. Accordingly, when the flow rate of light water decreases than that in a portion where the pressure-loss adjusting member 70 is not arranged, by arranging the pressure-loss adjusting member 70 to increase the pressure-loss, inflow of light water from the outside in this portion to the space between the pressure-loss adjusting member 70 and the lower nozzle 50 is suppressed.

Therefore, because only light water having passed through the lower core support plate flow holes 23 and the pressure-loss adjusting holes 72 flows to the lower nozzle 50, the comprehensive pressure-loss becomes substantially the same between the fuel assembly 31 having a small pressure-loss and provided with the pressure-loss adjusting member 70 and in the fuel assembly 31 having a large pressure-loss and without the pressure-loss adjusting member 70 more reliably. Accordingly, light water flowing from the lower plenum 42 to the reactor internal 30 flows to a plurality of the fuel assemblies 31 more reliably and substantially uniformly, thereby enabling stable operation of the reactor 1 due to the effect of light water flowing uniformly.

In the pressure-loss adjusting member 70, because the shielding units 75 are formed in a portion positioned between the legs 55 formed in the lower nozzle 50, the flow of light water between the adjacent lower nozzles 50 can be blocked by the shielding units 75, when light water flows from the lower core support plate 22 to the lower nozzle 50. Accordingly, it can be suppressed that light water having passed through the lower core support plate 22 flows toward the lower nozzle 50 in which the flow rate decreases due to the arrangement of the pressure-loss adjusting member 70, thereby enabling to equalize the flow rate of light water flowing to the fuel assemblies 31 more reliably. As a result, the flow rate of light water to the fuel assemblies 31 can be distributed more reliably.

### [Third embodiment]

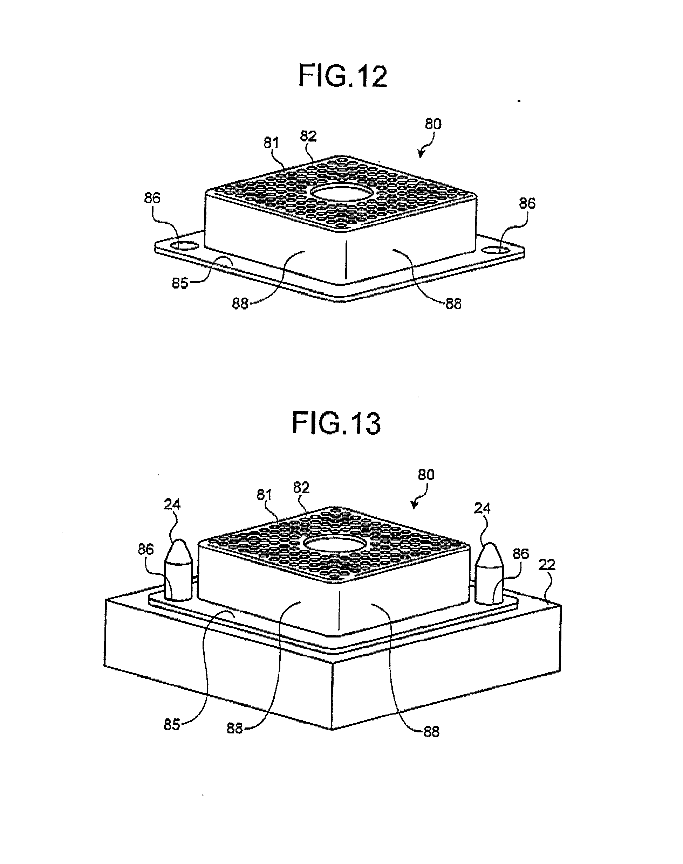

A pressure-loss adjusting member 80 according to a third embodiment of the present invention has substantially the same configuration as that of the pressure-loss adjusting member 60 according to the first embodiment, but is different in that pressure-loss adjusting holes 82 and engagement holes 86 are formed on different planes. Other configurations of the third embodiment are identical to those of the first embodiment, and thus explanations thereof will be omitted and like constituent elements are denoted by like reference signs. FIG. 12 is a perspective view of the pressure-loss adjusting member according to the third embodiment. The pressure-loss adjusting member 80 according to the third embodiment is different from the pressure-loss adjusting member 60 according to the first embodiment formed in the plate-like shape in that the pressure-loss adjusting holes 82 and the engagement holes 86 are formed on different planes.

More specifically, the pressure-loss adjusting member 80 includes a pressure-loss adjusting unit 81 formed substantially in a rectangular plate-like shape, and a fitting unit 85 formed in a hollow square plate-like shape, with an inner periphery thereof being formed in the same shape as that of an outer periphery of the pressure-loss adjusting unit 81. The pressure-loss adjusting unit 81 and the fitting unit 85 are provided with both surfaces being parallel to each other, and at positions different in an orthogonal direction to the both surfaces, and as viewed in the orthogonal direction to the both surfaces, the outer periphery of the pressure-loss adjusting unit 81 and the inner periphery of the fitting unit 85 are positioned overlapping on each other. The pressure-loss adjusting member 80 is formed by connecting the outer periphery of the pressure-loss adjusting unit 81 and the inner periphery of the fitting unit 85 with each other by a side portion 88, which is a plane connecting these portions, in a state with the pressure-loss adjusting unit 81 and the fitting unit 85 being positioned in such a manner.

The pressure-loss adjusting holes 82 are formed in the pressure-loss adjusting unit 81, and the pressure-loss adjusting holes 82 are provided by forming a number of holes having a relatively small diameter, that is, considerably smaller diameter than that of the lower core support plate flow holes 23, as in the pressure-loss adjusting holes 72 formed in the pressure-loss adjusting member 70 according to the second embodiment. Further, the engagement holes 86 are formed in the fitting unit 85, in such a manner that the engagement holes 86 are formed one each, in total two, near two corners forming one of opposing corners in the hollow square shape of the fitting unit 85. These engagement holes 86 are holes into which the fuel assembly guide pins 24 formed on the lower core support plate 22 are inserted. In other words, in the pressure-loss adjusting member 80, the pressure-loss adjusting unit 81 and the fitting unit 85 are provided at different positions in an inserting direction of the fuel assembly guide pins 24 into the engagement holes 86.

The pressure-loss adjusting member 80 according to the third embodiment has the configuration described above, and an effect thereof is explained below. FIG. 13 is a perspective view of a state where the pressure-loss adjusting member shown in FIG. 12 is arranged on a lower core support plate. When the pressure-loss adjusting member 80 according to the third embodiment is to be arranged on the lower core support plate 22, the fuel assembly guide pins 24 on the lower core support plate 22 are inserted into the engagement holes 86 formed in the fitting unit 85, in such an orientation that the fitting unit 85 is positioned on the lower core support plate 22 side and the pressure-loss adjusting unit 81 is away from the lower core support plate 22. The pressure-loss adjusting unit 81 and the fitting unit 85 are at different positions in the inserting direction of the fuel assembly guide pins 24 into the engagement holes 86. Therefore, when the fuel assembly guide pins 24 are inserted into the engagement holes 86 in this orientation and the fitting unit 85 is brought into contact with the lower core support plate 22, the pressure-loss adjusting unit 81 is in a state away from the lower core support plate 22. The arrangement of the pressure-loss adjusting member 80 on the lower core support plate 22 is performed in the state with the pressure-loss adjusting unit 81 being away from the lower core support plate 22.

Because the side portion 88 is formed in the pressure-loss adjusting member 80, when the fitting unit 85 is brought into contact with the lower core support plate 22 and arranged on the lower core support plate 22, the space between the lower core support plate flow holes 23 formed in the lower core support plate 22 and the pressure-loss adjusting unit 81 communicates with outside only from the portion of the lower core support plate flow holes 23 and the pressure-loss adjusting holes 82, thereby causing a substantially sealed state relative to the outside.

When the pressure-loss adjusting member 80 is arranged between the lower nozzle 50 and the lower core support plate 22, the pressure-loss adjusting member 80 is arranged on the lower core support plate 22 in this manner, and the lower nozzle 50 is arranged so that the fuel assembly guide pins 24 penetrating the engagement holes 86 are inserted into the positioning holes 56. As in the pressure-loss adjusting members 60 and 70 according to the first and second embodiments, the pressure-loss adjusting member 80 is arranged between the lower nozzle 50 arranged at one end of the fuel assembly 31 having a relatively small pressure-loss and the lower core support plate 22. When the pressure-loss adjusting member 80 according to the third embodiment is arranged on the lower core support plate 22, the pressure-loss adjusting unit 81 is away from the lower core support plate 22. Therefore, when the pressure-loss adjusting member 80 is arranged between the lower nozzle 50 and the lower core support plate 22, the pressure-loss adjusting unit 81 is positioned near the nozzle portion 51 of the lower nozzle 50.

With the above arrangements, when the reactor 1 is operated in a state with the pressure-loss adjusting member 80 being arranged between the lower nozzle 50 and the lower core support plate 22 and light water flows from the lower plenum 42 toward the fuel assembly 31, passing through the lower core support plate flow holes 23 in the lower core support plate 22, almost all of light water having passed through the lower core support plate flow holes 23 flows toward the pressure-loss adjusting unit 81 and passes through the pressure-loss adjusting holes 82. That is, because the side portion 88 is formed in the pressure-loss adjusting member 80 and the space between the lower core support plate flow holes 23 and the pressure-loss adjusting unit 81 is substantially sealed relative to the outside, light water having passed through the lower core support plate flow holes 23 does not flow to the outside of the space, and is directed toward the pressure-loss adjusting unit 81 to pass through the pressure-loss adjusting holes 82.

Because the pressure-loss adjusting holes 82 are provided by forming a number of holes having a relatively small diameter, when light water having passed through the lower core support plate flow holes 23 passes through the pressure-loss adjusting holes 82, light water is split. That is, when light water passes through the pressure-loss adjusting holes 82 having a relatively small diameter, the flow of light water is divided into a plurality of flows and split, and then flows toward the nozzle portion 51 of the lower nozzle 50. In this manner, when light water passes through the pressure-loss adjusting holes 82, light water is split by the pressure-loss adjusting holes 82. Therefore, when light water passes through the lower core support plate flow holes 23 and the pressure-loss adjusting holes 82, the resistance increases to increase the pressure-loss than a case that light water passes through only the lower core support plate flow holes 23.

Therefore, the comprehensive pressure-loss when light water flows from the lower plenum 42 to the fuel assemblies 31 is equalized between all the fuel assemblies 31 by arranging the pressure-loss adjusting member 80 to the fuel assembly 31 having a small pressure-loss. Accordingly, light water flowing from the lower plenum 42 to the reactor internal 30 does not flow much to the fuel assembly 31 having a small pressure-loss, is distributed to the fuel assemblies 31, and flows with respect to a plurality of the fuel assemblies 31 substantially uniformly.

Further, because the side portion 88 is formed in the pressure-loss adjusting member 80, the space between the lower core support plate flow holes 23 and the pressure-loss adjusting unit 81 positioned inside of the side portion 88 is substantially sealed with respect to the outside. Therefore, when light water flows from the lower plenum 42 toward the fuel assembly 31, passing through the lower core support plate flow holes 23 in the lower core support plate 22, light water hardly flows in and out between the space inside of the side portion 88 and the outside of the space. Therefore, when the flow rate of light water decreases than that in a portion where the pressure-loss adjusting member 80 is not arranged, by arranging the pressure-loss adjusting member 80 to increase the pressure-loss, inflow of light water from outside of this portion to the space inside of the side portion 88 is suppressed.

At the time of arranging the pressure-loss adjusting member 80 on the lower core support plate 22, the pressure-loss adjusting unit 81 is in a state away from the lower core support plate 22, and the pressure-loss adjusting unit 81 is positioned near the nozzle portion 51 of the lower nozzle 50. Therefore, light water having passed through the lower core support plate flow holes 23 and the pressure-loss adjusting holes 82, that is, only light water with the pressure-loss being increased flows to the nozzle flow holes 52 of the lower nozzle 50. Accordingly, light water flowing from the lower plenum 42 to the reactor internal 30 flows more uniformly to the fuel assemblies 31. Therefore, the reactor 1 is stably operated due to the effect of light water uniformly flowing to the fuel assemblies 31.

In the pressure-loss adjusting member 80, the pressure-loss adjusting unit 81 having the pressure-loss adjusting holes 82 formed therein and the fitting unit 85 having the engagement holes 86 formed therein are positioned on different planes, and when the fuel assembly guide pins 24 are inserted into the engagement holes 86, the pressure-loss adjusting unit 81 is formed to be away from the lower core support plate 22. Accordingly, the pressure-loss adjusting unit 81 can cause light water having passed through the lower core support plate flow holes 23 in the lower core support plate 22 and flowing toward the lower nozzle 50 to pass through the pressure-loss adjusting holes 82 at positions closer to the lower nozzle 50. Therefore, light water immediately after the flow rate thereof is decreased by increasing the pressure-loss can be caused to flow to the lower nozzle 50 and the fuel assemblies 31, and thus the flow rate of light water flowing to the fuel assembly 31 having a small pressure-loss can be decreased more reliably. As a result, the flow rate of light water to the fuel assemblies 31 can be distributed more reliably.

The pressure-loss adjusting holes 82 are formed by a number of holes having a small diameter, thereby enabling to split light water having passed through the lower core support plate flow holes 23. Therefore, the pressure-loss when light water passes through the pressure-loss adjusting holes 82 after having passed through the lower core support plate flow holes 23 can be increased more reliably than that of when light water passes through only the lower core support plate flow holes 23, due to the resistance generated by splitting flowing light water. Accordingly, the flow rate of light water flowing in the fuel assembly 31 having a small pressure-loss when the pressure-loss adjusting member 80 is arranged between the lower nozzle 50 of the fuel assembly 31 and the lower core support plate 22 can be equalized more reliably to that of light water flowing in the fuel assembly 31 having a large pressure-loss. As a result, the flow rate of light water to the fuel assemblies 31 can be distributed more reliably.

In the pressure-loss adjusting member 60 according to the first embodiment, the fitting tube 63 is provided on one surface thereof, and the pressure-loss adjusting holes 62 are formed inside of the fitting tube 63. However, the fitting tube 63 may not be provided. That is, the pressure-loss adjusting holes 62 are formed in a plate-like pressure-loss adjusting member 60, and may be provided by holes having a smaller opening area than that of the lower core support plate flow holes 23. If the opening area of the pressure-loss adjusting holes 62 is smaller than that of the lower core support plate flow holes 23, the pressure-loss adjusting holes 62 can cause light water to pass therethrough, with the pressure-loss being increased more than that of when light water passes through only the lower core support plate flow holes 23, without providing the fitting tube 63 to be fitted to the lower core support plate flow holes 23.

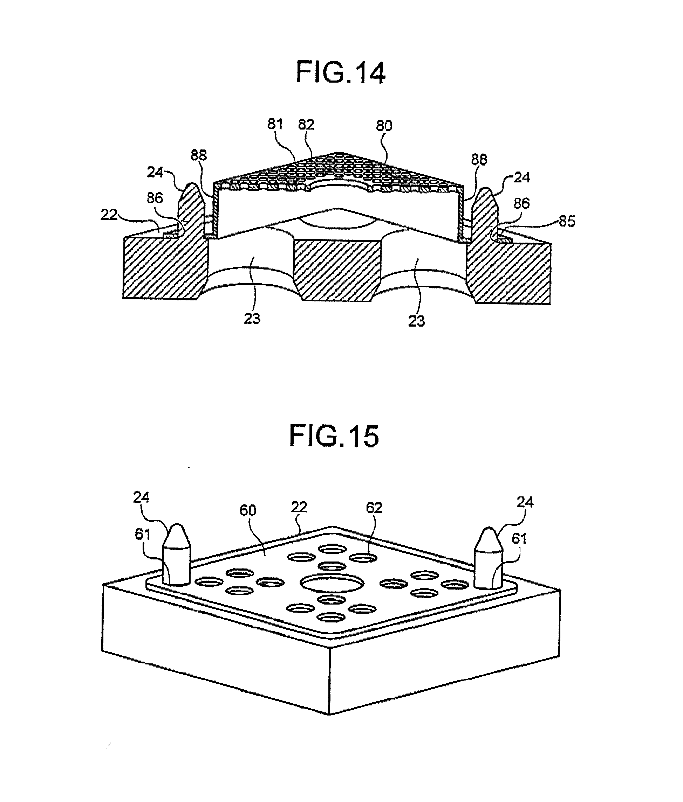

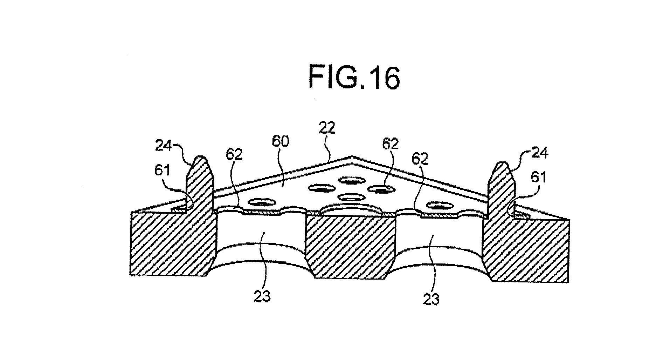

FIG. 15 is a perspective view of a modification of the pressure-loss adjusting member according to the first embodiment. FIG. 16 is a sectional view of relevant parts shown in FIG. 15. In the pressure-loss adjusting member 60 according to the first embodiment, the pressure-loss adjusting holes 62 are formed at positions corresponding to the lower core support plate flow holes 23 in the same number as that of the lower core support plate flow holes 23, and with an opening area thereof being smaller than that of the lower core support plate flow holes 23. However, the pressure-loss adjusting holes 62 can be formed in a shape other than this. For example, as shown in FIG. 15, the pressure-loss adjusting holes 62 can be provided by forming a number of holes having a diameter smaller than that of the lower core support plate flow holes 23, regardless of the position and the number of the lower core support plate flow holes 23. Even when the pressure-loss adjusting holes 62 are provided in this manner, when the pressure-loss adjusting member 60 is arranged on the lower core support plate 22, it is only required that the pressure-loss adjusting holes 62 are not blocked, and the total effective total opening area, which is an opening area of the pressure-loss adjusting holes 62 that can cause light water to pass therethrough, is smaller than the total opening area of the lower core support plate flow holes 23. Accordingly, the pressure-loss when light water passes through the lower core support plate flow holes 23 and the pressure-loss adjusting holes 62 can be increased.

The pressure-loss adjusting holes 62 can be provided by forming a number of holes having even a smaller diameter, so that light water passing through the pressure-loss adjusting holes 62 is further split, thereby increasing the pressure-loss. Therefore, the pressure-loss adjusting holes 62 only need to have the total effective opening area smaller than the total opening area of one or a plurality of the lower core support plate flow holes 23 for causing light water to flow to one of the lower nozzles 50, of the lower core support plate flow holes 23 formed in plural in the lower core support plate 22, or the pressure-loss adjusting holes can be formed in plural, thereby enabling to split light water having passed through the lower core support plate flow holes 23. The pressure-loss adjusting holes formed in the pressure-loss adjusting member can be in any form, so long as the pressure-loss can be increased when light water having passed through the lower core support plate flow holes 23 flows toward the nozzle flow holes 52 of the lower nozzle 50.

In the pressure-loss adjusting members 60, 70, and 80, only two engagement holes 61, 71, and 86 are formed corresponding to the fuel assembly guide pins 24. However, four engagement holes 61, 71, and 86 can be formed as in the positioning holes 56 in the lower nozzle 50. In this case, four fuel assembly guide pins 24 can be formed. On the contrary, the positioning holes 56 provided in the lower nozzle 50 can be only two corresponding to the fuel assembly guide pins 24. The fuel assembly guide pins 24 formed on the lower core support plate 22 and the positioning holes 56 formed in the lower nozzle 50 only need to be provided in plural so as to enable positioning at the time of arranging the lower nozzle 50. The engagement holes 61, 71, and 86 formed in the pressure-loss adjusting members 60, 70, and 80 only need to be formed so that the fuel assembly guide pins 24 can be inserted therein. By forming the engagement holes 61, 71, and 86, into which the fuel assembly guide pins 24 are inserted, in the pressure-loss adjusting members 60, 70, and 80, the pressure-loss adjusting members 60, 70, and 80 can be easily arranged on the lower core support plate 22.

The combination of the form of the pressure-loss adjusting members 60, 70, and 80 and the pressure-loss adjusting holes 62, 72, and 82 can be other than those described above. The pressure-loss adjusting members 60, 70, and 80 only need to be provided so that when light water having passed through the lower core support plate flow holes 23 is caused to flow toward the nozzle flow holes 52 in the lower nozzle 50, the pressure-loss can be increased as compared with a case that the pressure-loss adjusting members 60, 70, and 80 are not arranged.

### [Industrial Applicability]

As described above, the pressure-loss adjusting member and the reactor according to the present invention are useful in a pressurized water reactor, and is particularly suitable for a case of using a plurality of types of fuel assemblies.

### [Reference Signs List]

1 reactor
10 reactor vessel
15 inlet nozzle
16 outlet nozzle
20 core barrel
22 lower core support plate
23 lower core support plate flow hole
24 positioning pin
30 reactor internal
31 fuel assembly
42 lower plenum
50 lower nozzle
51 nozzle portion
52 nozzle flow hole
55 leg
56 positioning hole
60, 70, 80 pressure-loss adjusting member
61, 71, 86 engagement hole
62, 72, 82 pressure-loss adjusting hole
75 shielding unit
81 pressure-loss adjusting unit
85 fitting unit
88 side portion

## Claims

1. A pressure-loss adjusting member (60; 70; 80) **characterized in that** it comprises:
engagement holes (61; 71; 86) into which a plurality of positioning pins (24) formed on a lower core support plate (22) can be respectively inserted, on one surface of which a plurality of lower nozzles (50) respectively arranged at one end of a fuel assembly (31) can be arranged, the engagement holes (61; 71; 86) being formed in a same positional relationship as a relative positional relationship between positioning holes (56) formed in plural in the lower nozzle (50), so that the positioning pins (24) can be inserted therein; and
at least one pressure-loss adjusting hole (62; 72; 82) that can cause a primary coolant to pass therethrough in a state where pressure-loss in the fuel assembly (31) is increased as compared to when the primary coolant for the fuel assembly (31) passes through only lower core support plate flow holes (23) formed on the lower core support plate (22).

2. The pressure-loss adjusting member (60; 70; 80) of Claim 1, wherein the pressure-loss adjusting holes (62; 72; 82) have a total effective opening area smaller than a total opening area of one or a plurality of the lower core support plate flow holes (23) for causing the primary coolant to flow to one of the lower nozzles (50), from the lower core support plate flow holes (23) formed in plural in the lower core support plate (22).

3. The pressure-loss adjusting member (60; 70; 80) of Claim 1 or 2, comprising a plurality of pressure-loss adjusting holes (62; 72; 82), so that the primary coolant having passed through the lower core support plate flow holes (23) can be split.

4. The pressure-loss adjusting member (60; 70; 80) of any one of Claims 1 to 3, wherein the engagement holes (61; 71; 86) and the pressure-loss adjusting holes (62; 72; 82) are formed on a same plane.

5. The pressure-loss adjusting member (60; 70; 80) of Claim 4, wherein when ends of legs (55) formed in the lower nozzle (50) are brought into contact with one surface of the pressure-loss adjusting member (60; 70; 80) so that the positioning holes (56) and the engagement holes (61; 71; 86) communicate with each other, a shielding unit (75) having a length shorter than a gap between the legs (55) and a height lower than that of the legs (55) is respectively provided in a portion positioned between adjacent ones of the plurality of legs (55).

6. The pressure-loss adjusting member (60; 70; 80) of any one of Claims 1 to 3, further comprising:
a pressure-loss adjusting unit (81) in which the pressure-loss adjusting holes (62; 72; 82) are formed; and
a fitting unit (85) in which the engagement holes (61; 71; 86) are formed, and a position thereof in a direction of inserting the positioning pin into the engagement hole (61; 71; 86) is different from the position of a pressure-loss adjusting unit (81), wherein
the pressure-loss adjusting unit (81) is formed to be away from the lower core support plate (22), when the positioning pins (24) are inserted into the engagement holes (61; 71; 86).

7. A reactor (1) comprising:
a lower nozzle (50) having a plurality of nozzle flow holes (52) through which a primary coolant for a fuel assembly (31) can flow toward the fuel assembly (31), and a plurality of positioning holes (56), which are holes for positioning, formed therein and arranged at one end of the fuel assembly (31);
a lower core support plate (22) provided so that a plurality of the lower nozzles (50) can be arranged thereon by inserting a plurality of positioning pins (24) formed on one surface thereof into the positioning holes (56), and a plurality of lower core support plate flow holes (23) that can cause the primary coolant to flow from a direction of a surface opposite to a surface on which the lower nozzle (50) is formed toward the lower nozzle (50) are formed therein; and
the pressure-loss adjusting member (60; 70; 80) of any one of Claims 1 to 6, which is arranged between the lower nozzle (50) arranged at one end of the fuel assembly (31) having a relatively small pressure-loss and the lower core support plate (22) by inserting the positioning pin into the engagement hole (61; 71; 86) at a position between the lower nozzle (50) and the lower core support plate (22).
